(19) Europäisches Patentamt
European Patent Office
Office européen des brevets

(11) EP 4 808 016 A1

(12) **EUROPEAN PATENT APPLICATION**

(43) Date of publication:
**16.09.2026 Bulletin 2026/38**

(21) Application number: **26157728.2**

(22) Date of filing: **11.02.2026**

(51) International Patent Classification (IPC):
***H04B 10/077*** (2013.01) ***G02B 6/35*** (2006.01)
***H04B 10/079*** (2013.01) ***H04Q 11/04*** (2006.01)

(52) Cooperative Patent Classification (CPC):
**H04B 10/0775; G02B 6/35; H04B 10/07955; H04Q 11/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.03.2025 US 202519076208**

(71) Applicant: **Microsoft Technology Licensing, LLC**
**Redmond, WA 98052-6399 (US)**

(72) Inventors:
- **Billor, Denizcan**
  **Redmond, WA 98052 (US)**
- **Yin, Yawei**
  **Redmond, WA 98052 (US)**
- **Gaudette, Jamie**
  **Redmond, WA 98052 (US)**
- **Guan, Binbin**
  **Redmond, WA 98052 (US)**
- **Struthers, Tristan**
  **Redmond, WA 98052 (US)**
- **Shrivastava, Shubham**
  **Redmond, WA 98052 (US)**

(74) Representative: **Grünecker Patent- und Rechtsanwälte**
**PartG mbB**
**Leopoldstraße 4**
**80802 München (DE)**

# (54) ESTIMATING LOSS IN OPTICAL CIRCUIT SWITCH NETWORKS

(57) Systems and methods are provided for a novel algorithm and system for automatically estimating the loss in an optical circuit switches ("OCS") network and identifying components with unusually high loss. A computing system receives a first set of optical power data corresponding to optical power emitted from each of a plurality of optical transmitters that is communicatively coupled to input ports of an OCS, via optical fiber cables, while receiving a second set of optical power data measured by a photodetector of each of a plurality of optical receivers that is communicatively coupled to output ports of the OCS, via optical fiber cables. The computing system calculates a plurality of optical signal losses, based on analysis of the first and second sets of optical power data in view of expected ranges of optical power. The computing system generates a report, based on the plurality of optical signal losses.

Instructions 170a
Instructions 175
Power Data 180a
Tx Optics 130a
Optical Transmitter 125a
Tx Port 135a
140a
Input Port 110a
Instructions 170b
Power Data 180b
Tx Optics 130b
Optical Transmitter 125b
Tx Port 135b
140b
Input Port 110b
Instructions 170m
Power Data 180m
Tx Optics 130m
Optical Transmitter 125m
Tx Port 135m
140m
Input Port 110m
Computing System(s) 165
Power Data 185a
Photodetector 150a
Optical Receiver 145a
Rx Port 155a
160a
Output Port 115a
Power Data 185b
Photodetector 150b
Optical Receiver 145b
Rx Port 155b
160b
Output Port 115b
Power Data 185n
Photodetector 150n
Optical Receiver 145n
Rx Port 155n
160n
Output Port 115n
120a
120b
120z
OCS 105
Report(s) 190
Device(s) 195
100
1/5

Fig. 1



Processed by Luminess, 75001 PARIS (FR)

## Description

### BACKGROUND

In modern optical networks, optical circuit switches ("OCS") play a critical role in routing signals between different ports. These networks include hundreds of input and output fiber connections, and each connection between ports introduces an optical signal loss, which reduces network performance. This loss can occur due to multiple factors, including the loss in the fibers themselves, the internal loss within the OCS, and the connection losses between different optical components. For an OCS with hundreds of ports (e.g., 320 input ports and 320 output ports), understanding and diagnosing the sources of high loss is crucial. However, with such a high number of possible connections and unknown variables, it becomes extremely challenging to identify which component or connection is responsible for any abnormal loss. Current methods for loss estimation rely on either manual inspection, time-consuming testing, or imprecise estimation techniques, which can lead to inefficient maintenance and degraded network performance. It is with respect to this general technical environment to which aspects of the present disclosure are directed. In addition, although relatively specific problems have been discussed, it should be understood that the examples should not be limited to solving the specific problems identified in the background.

### SUMMARY

This summary is provided to introduce a selection of concepts in a simplified form that are further described below in the detailed description section. This summary is not intended to identify key features or essential features of the claimed subject matter, nor is it intended as an aid in determining the scope of the claimed subject matter.

The currently disclosed technology, among other things, provides for systems and methods for automatically estimating the loss in an OCS network and identifying components with unusually high loss. By leveraging mathematical modeling, regularization techniques, and sparse matrix solving, among other techniques, the system can determine the contribution of individual components, such as the transmitter fiber, the internal OCS switching mechanism, and the receiver fiber, to the overall loss. In examples, the system takes as input a set of measured total losses between different port combinations (e.g., a comma-separated values ("CSV") file of measured losses between 320 input ports and 320 output ports). From this data, the system constructs a series of equations that model the losses as the sum of multiple unknown components. The system then solves these equations (e.g., using a least squares optimization method), applying regularization to ensure that the solutions are realistic and within expected ranges. By automatically diagnosing high-loss components, the system significantly enhances the performance, reliability, and cost-efficiency of optical networks in various industries. This system is particularly valuable for large-scale data centers, artificial intelligence ("AI") infrastructure, and telecommunications providers where maintaining low-loss optical paths is critical to network performance.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

### BRIEF DESCRIPTION OF THE DRAWINGS

A further understanding of the nature and advantages of particular embodiments may be realized by reference to the remaining portions of the specification and the drawings, which are incorporated in and constitute a part of this disclosure.

Fig. 1 depicts an example system for estimating loss in optical circuit switch networks.
Fig. 2 depicts an example optical circuit switch network and example sources of losses that can be estimated using the example system of Fig. 1.
Fig. 3 depicts an example heat map of insertion loss measurements through an optical circuit switch when estimating loss in optical circuit switch networks.
Fig. 4 depicts an example method for estimating loss in optical circuit switch networks.
Fig. 5 depicts a block diagram illustrating example physical components of a computing device with which aspects of the technology may be practiced.

### DETAILED DESCRIPTION OF CERTAIN EMBODIMENTS

Large optical circuit switches (e.g., 320 input ports and 320 output ports) experience optical signal losses that can

degrade the quality of communication. The problem lies in identifying which components (fibers or OCS internal switching mechanisms) are causing excessive loss. This is particularly difficult in large networks where the number of possible connections is vast, and each connection may have its own unique loss profile.

The present technology is directed to optical networking and specifically to a method and system for accurately identifying and estimating the source of loss in OCS networks. This technology addresses the challenge of determining the specific components that contribute to high optical loss, which can degrade the performance and reliability of large-scale optical networks used in data centers, telecommunications, and AI infrastructure. In examples, the system solves the problem by formulating it as an optimization problem. The measured total loss between any two connected ports is the sum of the individual losses of the components involved in the connection. By creating a large system of linear equations, each representing one measured total loss, the system can estimate the loss for each component. Additionally, the system applies regularization to ensure that the estimated losses remain within plausible ranges, as prior knowledge about typical fiber and OCS losses is incorporated into the model.

Various modifications and additions can be made to the embodiments discussed herein without departing from the scope of the disclosed techniques. For example, while the embodiments described above refer to particular features, the scope of the disclosed techniques also includes embodiments having different combinations of features and embodiments that do not include all of the above-described features.

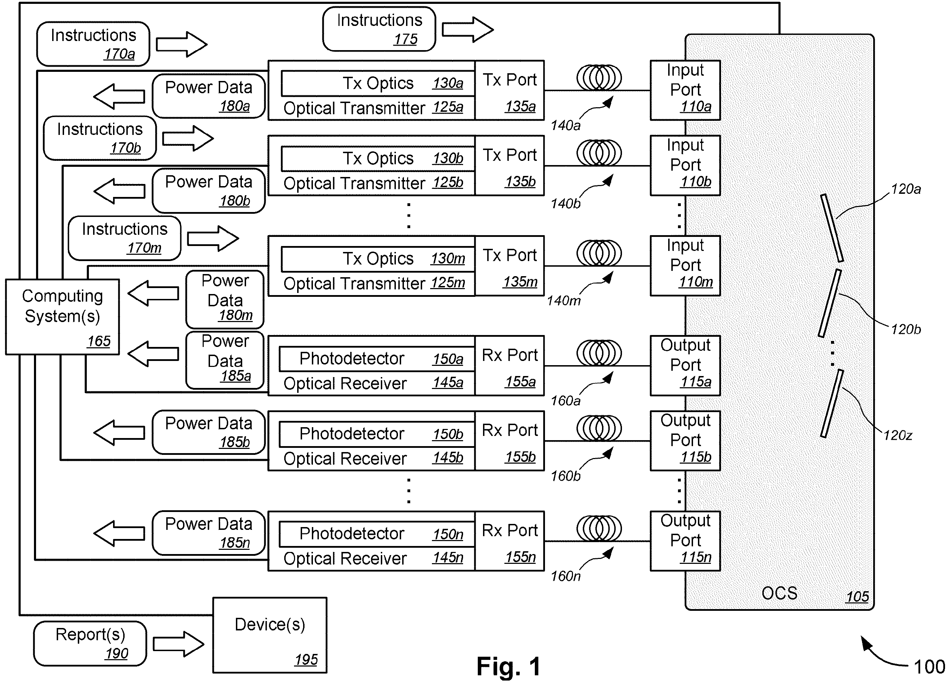

Turning to the embodiments as illustrated by the drawings, Figs. 1-5 illustrate some of the features of methods, systems, and apparatuses for estimating loss in optical circuit switch networks, as referred to above. The methods, systems, and apparatuses illustrated by Figs. 1-5 refer to examples of different embodiments that include various components and steps, which can be considered alternatives or which can be used in conjunction with one another in the various embodiments. The description of the illustrated methods, systems, and apparatuses shown in Figs. 1-5 is provided for purposes of illustration and should not be considered to limit the scope of the different embodiments.

Fig. 1 depicts an example system 100 for estimating loss in optical circuit switch networks. System 100 includes an OCS 105, which includes a plurality of input ports 110a-110m (collectively, "input ports 110"), a plurality of output ports 115a-115n (collectively, "output ports 115"), and a selective switching system 120. In examples, the selective switching system 120 includes a set of micro-electromechanical systems ("MEMS") mirrors 120a-120z that are individually selectively actuatable to route optical signals from one input port 110 to a selected one of the plurality of output ports 115. Herein, *m, n,* and *z* are non-negative integer numbers that may be either all the same as each other, all different from each other, or some combination of same and different (e.g., one set of two or more having the same values with the others having different values, a plurality of sets of two or more having the same value with the others having different values). System 100 further includes a plurality of optical transmitters 125a-125m (collectively, "optical transmitters 125"), which includes a plurality of transmitter optics 130a-130m (collectively, "transmitter optics 130" or "Tx optics 130") and a plurality of transmitter ports 135a-135m (collectively, "transmitter ports 135" or "Tx ports 135"). System 100 also includes a plurality of optical receivers 145a-145n, which includes a plurality of photodetectors 150a-150n (collectively, "photodetectors 150") and a plurality of receiver ports 155a-155m (collectively, "receiver ports 155" or "Rx ports 155"). System 100 further includes a first set of optical fiber cables 140a-140m (collectively, "optical fiber cables 140"), a second set of optical fiber cables 160a-160n (collectively, "optical fiber cables 160"), and computing system(s) 165. The first set of optical fiber cables 140a-140m couples the plurality of the input ports 110a-110m with the Tx ports 135a-135m of the plurality of optical transmitters 125a-125m. The second set of optical fiber cables 160a-160n couples the plurality of the input ports 110a-110m with the Tx ports 135a-135m of the plurality of optical transmitters 125a-125m.

In some aspects, the computing system(s) 165 causes each of the plurality of optical transmitters 125a-125m to transmit optical signals from a corresponding one of the Tx optics 130a-130m, via the optical transmission port 135 of that optical transmitter 125, to a corresponding one of the plurality of input ports 110a-110m of the OCS 105. Each optical transmitter 125 transmits optical signals, using the Tx optic 130 of that optical transmitter 125, via the Tx port 135 of that optical transmitter 125, to the corresponding input port 110 among the plurality of input ports 110a-110m of the OCS 105, over the corresponding optical fiber cable 140 among the plurality of optical fiber cables 140a-140m. In some examples, the computing system(s) 165 sends instructions 170 among instructions 170a-170m to each of the plurality of optical transmitters 125a-125m to transmit the optical signals, in a programmed sequence with respect to duration of optical signals to particular pairs of optical transmitters and input ports (e.g., optical transmitter 125a - input port 110a, optical transmitter 125b - input port 110b, and so on). The computing system(s) 165 causes the OCS 105 to selectively route, using the selective switching system 120 of the OCS 105, the optical signals that are received by each input port 110 among the plurality of input ports 110a-110m to each of the plurality of output ports 115a-115n. In examples, the computing system(s) 165 sends instructions 175 to the OCS 105 to selectively route the optical signals from input ports 110 to output ports 115. The optical signals that are emitted from each output port 115 are transmitted over a corresponding one of the second set of optical fiber cables 160a-160n to the photodetector 150, via the optical Rx port 155, of a corresponding one of the plurality of optical receivers 145a-145n. The computing system(s) 165 receives a first set of optical power data 180a-180m from the plurality of optical transmitter 125a-125m, while receiving a second set of optical power data 185a-185n from the plurality of optical receivers 145a-145n. The computing system(s) 165 calculates a plurality of optical

signal losses, based on analysis of the first set of optical power data 180a-180m and the second set of optical power data 185a-185n in view of expected ranges of optical power. The computing system(s) 165 generates a report(s) 190, based on the plurality of optical signal losses, and sends the report(s) 190 to device(s) 195. In some examples, the report includes estimated losses for each of a plurality of components of the optical circuit switch network.

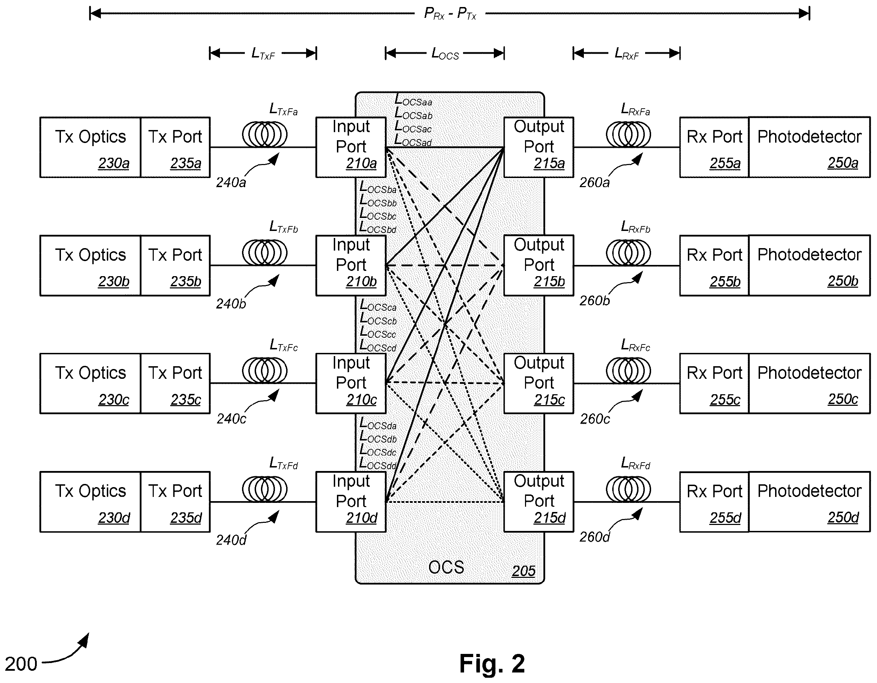

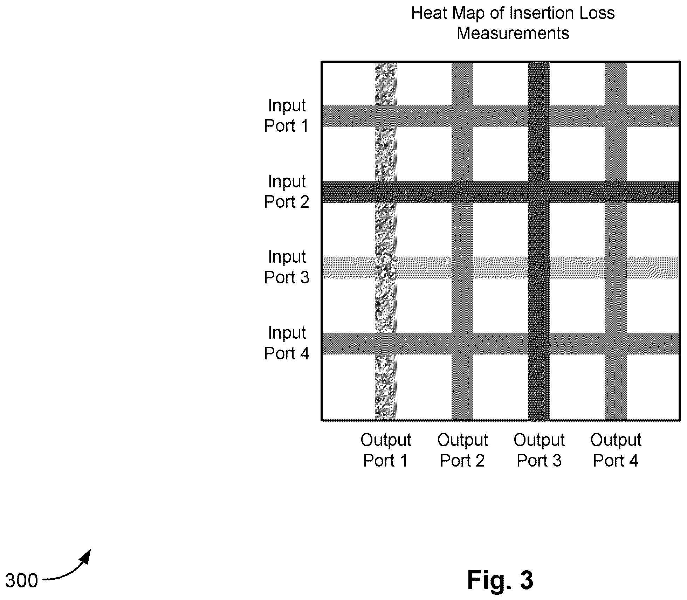

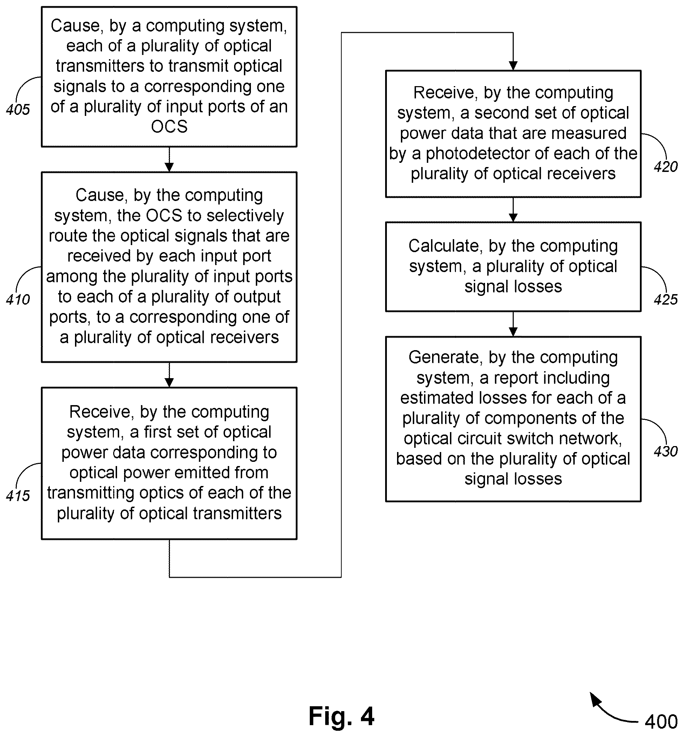

In operation, the computing system(s) 165 may perform methods for estimating loss in optical circuit switch networks, as described in detail with respect to Figs. 2-4. For example, example optical circuit switch network 200 as described below with respect to Fig. 2, example heat map 300 as described below with respect to Fig. 3, and method 400 as described below with respect to Fig. 4 may be applied with respect to the operations of system 100 of Fig. 1.

Fig. 2 depicts an example optical circuit switch network 200 and example sources of losses that can be estimated using the example system 100 of Fig. 1. In Fig. 2, example optical circuit switch network 200 includes an OCS 205, input ports 210a-210d, output ports 215a-215d, Tx optics 230a-230d, Tx ports 235a-235d, optical fiber cables 240a-240d, photodetectors 250a-250d, Rx ports 255a-255d, and optical fiber cables 260a-260d. The input ports 210a-210d and the output ports 215a-215d are part of OCS 205. The Tx optic 230a and the Tx port 235a are part of a first optical transmitter among a plurality of optical transmitters (e.g., optical transmitters 125a-125m of Fig. 1), while the Tx optic 230b and the Tx port 235b are part of a second optical transmitter among the plurality of optical transmitters, and so on for each pair of Tx optics 230a-230d - Tx ports 235a-235d. Each of the Tx ports 235a-235d communicatively couples with a corresponding one of the input ports 210a-210d via a corresponding one of optical fiber cables 240a-240d. Although not shown in Fig. 2, a selective switching system of the OCS 205 is used to route optical signals from each input port 210 to each of the plurality of output ports 215. The photodetector 250a and the Rx port 255a are part of a first optical receiver among a plurality of optical receivers (e.g., optical receivers 145a-145m of Fig. 1), while the photodetector 250b and the Rx port 255b are part of a second optical receiver among the plurality of optical receivers, and so on for each pair of photodetectors 250a-250d - Rx ports 255a-255d. Each of the Rx ports 255a-255d communicatively couples with a corresponding one of the output ports 215a-215d via a corresponding one of optical fiber cables 260a-260d.

In examples, OCS 205, input ports 210a-210d, output ports 215a-215d, Tx optics 230a-230d, Tx ports 235a-235d, optical fiber cables 240a-240d, photodetectors 250a-250d, Rx ports 255a-255d, and optical fiber cables 260a-260d of Fig. 2 may be similar, if not identical, to the OCS 105, input ports 110a-110m, output ports 115a-115n, Tx optics 130a-130m, Tx ports 135a-135m, optical fiber cables 140a-140m, photodetectors 150a-150n, Rx ports 155a-155n, and optical fiber cables 160a-160n, respectively, of example system 100 of Fig. 1, and the description of these components of example system 100 of Fig. 1 are similarly applicable to the corresponding components of Fig. 2.

Fig. 2 illustrates a simplified representation of optical paths over which a computing system (e.g., computing system(s) 165 of Fig. 1) causes a selective switching system of an OCS (e.g., selective switching system 120 of OCS 105 of Fig. 1) to route optical signals from a plurality of optical transmitters (e.g., optical transmitters 125a-125m of Fig. 1) to a plurality of optical receivers (e.g., optical receivers 145a-145n of Fig. 1), via input ports (e.g., input ports 110a-110m of Fig. 1) and output ports (e.g., output ports 115a-115n of Fig. 1) of the OCS. As shown in Fig. 2, OCS 205 has four input ports 210a-210d and four output ports 215a-215d, with solid lines representing optical paths connecting each input port 210a-210d to the first output port 215a, long-dashed lines representing optical paths connecting each input port 210a-210d to the second output port 215b, medium-dashed lines representing optical paths connecting each input port 210a-210d to the third output port 215c, and short-dashed lines representing optical paths connecting each input port 210a-210d to the fourth output port 215d. Although OCS 205 of Fig. 2 is shown to have four input ports 210a-210d and four output ports 215a-215d, this is merely for purposes of simplicity of illustration, and the OCS 205 can have any suitable number of input and output ports (e.g., tens, hundreds, or thousands of input ports and tens, hundreds, or thousands of output ports) For example, for an OCS 205 having 320 input ports 210 and 320 output ports 215, the selective switching system of that OCS would selectively route optical signals from each input port to any one of the 320 output ports 215.

As further shown in Fig. 2, the system can estimate the components of loss including transmitter fiber loss ("$L_{TxF}$"), OCS internal loss ("$L_{OCS}$"), and receiver fiber loss ("$L_{RxF}$") from a difference between optical power data at the receivers ("$P_{Rx}$") and optical power data at the transmitters ("$P_{Tx}$"). As used herein, the transmitter fiber loss ($L_{TxF}$) refers to loss from the transmitter fiber (in this case, an optical fiber cable 240) connecting an optical module (in this case, a Tx optic 230/Tx port 235 of an optical transmitter) to the OCS. Similarly, the receiver fiber loss ($L_{RxF}$) refers to loss from the OCS output over the receiver fiber to the receiving optical module (in this case, a photodetector 250/Rx port 255 of an optical receiver). The OCS internal loss refers to loss that occurs as optical signals travel within an OCS (in this case, OCS 205) between two internal OCS ports (in this case, from one input port 210 to an output port 215). In other words, the estimation of loss is based on decomposing the total optical loss between connected ports in an OCS into the contributions of individual components: the transmitter fiber, the OCS internal switching mechanism, and the receiver fiber. By formulating these relationships as a system of mathematical equations, optimization techniques can be used to estimate the unknown loss values and to pinpoint high-loss components.

In an optical network with a large number of ports (for example, 320 input ports and 320 output ports), the measured total loss for a connection between any input port *i* (sometimes referred to as a south port) and output port *j* (sometimes referred to as a north port) is influenced by three main factors:

1. Transmitter Fiber Loss that occurs in the optical fiber connecting the optical module (such as a laser source) to the OCS at input port *i*. The Transmitter Fiber Loss is denoted herein as $L_{TxF_i}$ and varies depending on the condition of the optical fiber and the specific input port *i*.
2. OCS Internal Loss that occurs once the signal enters the OCS at input port *i*, where the signal is switched internally to connect to output port *j*. Each pair of input-output ports (*i, j*) has its own unique loss due to internal switching. The OCS Internal Loss is denoted herein as $L_{OCS_i,j}$.
3. Receiver Fiber Loss that occurs after the signal exits the OCS at output port *j*, where the signal travels through another optical fiber to the receiving optical module (such as a photodetector). The Receiver Fiber Loss is denoted $L_{RxF_i}$ and varies depending on the condition of the optical fiber and the specific output port *j*.

Thus, the total loss ($L_{i,j}$) measured for any given port connection (*i, j*) is expressed as:

$$L_{i,j} = L_{TxF_i} + L_{OCS_i,j} + L_{RxF_j}, \quad \text{(Eqn. 1)}$$

where $L_{TxF_i}$ is the transmitter fiber loss at input port *i*, $L_{OCS_i,j}$ is the internal OCS loss between input port *i* and output port *j*, and $L_{RxF_j}$ is the receiver fiber loss at output port *j*. Thus, given the total loss measurements for every combination of ports, each measurement can be represented as one equation. This linear relationship serves as the foundation for constructing a system of equations that models the entire optical circuit switch network 200.

For an OCS with *N* number of input ports and *M* number of output ports, a system of equations that is created would include $N \times M$ number of port combinations, the total measured loss for each port combination (e.g., known values) being represented by one of $N \times M$ number of equations. The unknown values are the transmitter fiber loss at input port *i* (that is, $L_{TxF_i}$), the internal OCS loss for each port pair (*i, j*) (that is, $L_{OCS_i,j}$), and the receiver fiber loss at output port *j* (that is, $L_{RxFj}$).

In an example, for an OCS with 320 input ports and 320 output ports, the total number of possible connections is $320 \times 320 = 102{,}400$. However, the number of unknowns is: (a) 320 unknowns for the transmitter fiber losses ($L_{TxF_i}$), one for each input port *i*; (b) 102,400 unknowns for the internal OCS losses ($L_{OCS_i,j}$), one for each combination of input and output ports (*i, j*); and (c) 320 unknowns for the receiver fiber losses ($L_{RxFj}$), one for each output port *j*. This results in a total of 103,040 unknowns, but only 102,400 equations, making the system underdetermined (more unknowns than equations). Solving this system directly would be impossible because there are infinitely many potential solutions.

To address the underdetermined nature of the system, regularization - a mathematical technique that imposes additional constraints or preferences on the solution - is used, ensuring that the results are realistic. To implement regularization, prior knowledge about typical loss values is incorporated into the model. Specifically, the following typical values are incorporated:

- Fiber losses (for both transmitter and receiver fibers) are typically in the range of 0.2 to 0.25 decibels (dB).
- OCS internal losses are typically in the range of 1.0 to 2.0 dB.

By introducing this prior knowledge into the optimization problem, solutions that deviate too much from these expected values are penalized, in some cases, by adding regularization terms to the system, which enforce that the estimated losses stay close to the expected values. Mathematically, terms are added to the objective function that penalize large deviations from these typical values:

$$\min_{(L_{TxF_i}),(L_{OCS_i,j}),(L_{RxF_j})} \sum_{i=1}^{N}\sum_{j=1}^{M}\left(L_{i,j} - \left(L_{TxF_i} + L_{OCS_{i,j}} + L_{RxF_j}\right)\right)^2 + \lambda_1 \sum_{i=1}^{N}\left(L_{TxF_i} - \mu_F\right)^2 + \lambda_2 \sum_{i=1}^{N}\sum_{j=1}^{M}\left(L_{OCS_{i,j}} - \mu_{OCS}\right)^2 + \lambda_3 \sum_{j=1}^{M}\left(L_{RxF_j} - \mu_F\right)^2, \quad \text{(Eqn. 2)}$$

where $\lambda_1$, $\lambda_2$, and $\lambda_3$ are regularization parameters that control how strongly the system penalizes deviations from the expected values, $\mu_F$ represents an expected fiber loss (e.g., 0.225 dB), and $\mu_{OCS}$ represents an expected OCS internal loss (e.g., 1.5 dB). This formulation ensures that the optimization problem has a unique solution, even though the system is underdetermined.

The problem is now transformed into a least squares ("LSQR") optimization problem, where the goal is to minimize the difference between the measured total losses and the estimated losses based on the model, while also minimizing the deviation of the component losses from their expected values. The least squares optimization problem is

solved using numerical techniques (such as the LSQR algorithm) that are well-suited to large-scale, sparse systems such as the one described herein. The system efficiently handles the large number of equations and unknowns using sparse matrix representations.

After solving the least squares problem, the system outputs the estimated values for: (a) the transmitter fiber losses ($L_{TxF_i}$) for the transmitter optical fibers connected to the input ports *i*; (b) the internal OCS losses ($L_{OCS_i,j}$) for the connections for the plurality of combinations of input ports *i* and output ports *j* within the OCS; and (c) the receiver fiber losses ($L_{RxFj}$) for the receiver optical fibers connected to the output ports *j*. Additionally, the system identifies components with abnormally high loss, allowing network operators to quickly identify and address the problem areas.

Turning back to the example of Fig. 2, the computing system causes the Tx optics 230a-230d to each send optical signals to corresponding input ports 210a-210d, while causing the selective switching system of the OCS to selectively route the optical signals, in a programmed sequence at least with respect to duration of optical signals to particular pairs of optical transmitters and input ports. An example programmed sequence includes sending optical signals over the following paths, in any suitable order:

(1) first Tx optics 230a to first input port 210a, via first Tx port 235a and first transmitter optical fiber 240a, to first output port 215a, to first photodetector 250a, via first receiver optical fiber 260a and via first Rx port 255a;
(2) first Tx optics 230a to first input port 210a, via first Tx port 235a and first transmitter optical fiber 240a, to second output port 215b, to second photodetector 250b, via second receiver optical fiber 260b and via second Rx port 255b;
(3) first Tx optics 230a to first input port 210a, via first Tx port 235a and first transmitter optical fiber 240a, to third output port 215c, to third photodetector 250c, via third receiver optical fiber 260c and via third Rx port 255c;
(4) first Tx optics 230a to first input port 210a, via first Tx port 235a and first transmitter optical fiber 240a, to fourth output port 215d, to fourth photodetector 250d, via fourth receiver optical fiber 260d and via fourth Rx port 255d;
(5) second Tx optics 230b to second input port 210b, via second Tx port 235b and second transmitter optical fiber 240b, to first output port 215a, to first photodetector 250a, via first receiver optical fiber 260a and via first Rx port 255a;
(6) second Tx optics 230b to second input port 210b, via second Tx port 235b and second transmitter optical fiber 240b, to second output port 215b, to second photodetector 250b, via second receiver optical fiber 260b and via second Rx port 255b;
(7) second Tx optics 230b to second input port 210b, via second Tx port 235b and second transmitter optical fiber 240b, to third output port 215c, to third photodetector 250c, via third receiver optical fiber 260c and via third Rx port 255c;
(8) second Tx optics 230b to second input port 210b, via second Tx port 235b and second transmitter optical fiber 240b, to fourth output port 215d, to fourth photodetector 250d, via fourth receiver optical fiber 260d and via fourth Rx port 255d;
(9) third Tx optics 230c to third input port 210c, via third Tx port 235c and third transmitter optical fiber 240c, to first output port 215a, to first photodetector 250a, via first receiver optical fiber 260a and via first Rx port 255a;
(10) third Tx optics 230c to third input port 210c, via third Tx port 235c and third transmitter optical fiber 240c, to second output port 215b, to second photodetector 250b, via second receiver optical fiber 260b and via second Rx port 255b;
(11) third Tx optics 230c to third input port 210c, via third Tx port 235c and third transmitter optical fiber 240c, to third output port 215c, to third photodetector 250c, via third receiver optical fiber 260c and via third Rx port 255c;
(12) third Tx optics 230c to third input port 210c, via third Tx port 235c and third transmitter optical fiber 240c, to fourth output port 215d, to fourth photodetector 250d, via fourth receiver optical fiber 260d and via fourth Rx port 255d;
(13) fourth Tx optics 230d to fourth input port 210d, via fourth Tx port 235d and fourth transmitter optical fiber 240d, to first output port 215a, to first photodetector 250a, via first receiver optical fiber 260a and via first Rx port 255a;
(14) fourth Tx optics 230d to fourth input port 210d, via fourth Tx port 235d and fourth transmitter optical fiber 240d, to second output port 215b, to second photodetector 250b, via second receiver optical fiber 260b and via second Rx port 255b;
(15) fourth Tx optics 230d to fourth input port 210d, via fourth Tx port 235d and fourth transmitter optical fiber 240d, to third output port 215c, to third photodetector 250c, via third receiver optical fiber 260c and via third Rx port 255c; and
(16) fourth Tx optics 230d to fourth input port 210d, via fourth Tx port 235d and fourth transmitter optical fiber 240d, to fourth output port 215d, to fourth photodetector 250d, via fourth receiver optical fiber 260d and via fourth Rx port 255d.

For each of the above paths, the following are the corresponding losses, including the additional terms:

$$L_{a,a} = P_{Rx_a} - P_{Tx_a} = L_{TxFa} + L_{OCSaa} + L_{TxRa} + \lambda_1 (L_{TxFa} - \mu_F)^2 + \lambda_2 (L_{OCSaa} - \mu_{OCS})^2 + \lambda_3 (L_{TxRa} - \mu_F)^2; \quad (1)$$

$$L_{a,b} = P_{Rx_b} - P_{TX_a} = L_{TxFa} + L_{OCSab} + L_{TxRb} + \lambda_1 (L_{TxFa} - \mu_F)^2 + \lambda_2 (L_{OCSab} - \mu_{OCS})^2 + \lambda_3 (L_{TxRb} - \mu_F)^2; \quad (2)$$

$$L_{a,c} = P_{Rx_C} - P_{Tx_a} = L_{TxFa} + L_{OCSac} + L_{TxRc} + \lambda_1 (L_{TxFa} - \mu_F)^2 + \lambda_2 (L_{OCSac} - \mu_{OCS})^2 + \lambda_3 (L_{TxRc} - \mu_F)^2; \quad (3)$$

$$L_{a,d} = P_{Rx_d} - P_{Tx_a} = L_{TxFa} + L_{OCSad} + L_{TxRd} + \lambda_1 (L_{TxFa} - \mu_F)^2 + \lambda_2 (L_{OCSad} - \mu_{OCS})^2 + \lambda_3 (L_{TxRd} - \mu_F)^2; \quad (4)$$

$$L_{b,a} = P_{Rx_a} - P_{Tx_b} = L_{TxFb} + L_{OCSba} + L_{TxRa} + \lambda_1 (L_{TxFb} - \mu_F)^2 + \lambda_2 (L_{OCSba} - \mu_{OCS})^2 + \lambda_3 (L_{TxRa} - \mu_F)^2; \quad (5)$$

$$L_{b,b} = P_{RX_b} - P_{Tx_b} = L_{TxFb} + L_{OCSbb} + L_{TxRb} + \lambda_1 (L_{TxFb} - \mu_F)^2 + \lambda_2 (L_{OCSbb} - \mu_{OCS})^2 + \lambda_3 (L_{TxRb} - \mu_F)^2; \quad (6)$$

$$(7)\ L_{b,c} = P_{Rx_c} - P_{Tx_b} = L_{TxFb} + L_{OCSbc} + L_{TxRc} + \lambda_1 (L_{TxFb} - \mu_F)^2 + \lambda_2 (L_{OCSbc} - \mu_{OCS})^2 + \lambda_3 (L_{TxRc} - \mu_F)^2; \quad (7)$$

$$L_{b,d} = P_{Rx_d} - P_{Tx_b} = L_{TxFb} + L_{OCSbd} + L_{TxRd} + \lambda_1 (L_{TxFb} - \mu_F)^2 + \lambda_2 (L_{OCSbd} - \mu_{OCS})^2 + \lambda_3 (L_{TxRd} - \mu_F)^2; \quad (8)$$

$$L_{c,a} = P_{Rx_a} - P_{Tx_c} = L_{TxFc} + L_{OCSca} + L_{TxRa} + \lambda_1 (L_{TxFc} - \mu_F)^2 + \lambda_2 (L_{OCSca} - \mu_{OCS})^2 + \lambda_3 (L_{TxRa} - \mu_F)^2; \quad (9)$$

$$L_{c,b} = P_{Rx_b} - P_{Tx_c} = L_{TxFc} + L_{OCScb} + L_{TxRb} + \lambda_1 (L_{TxFc} - \mu_F)^2 + \lambda_2 (L_{OCScb} - \mu_{OCS})^2 + \lambda_3 (L_{TxRb} - \mu_F)^2; \quad (10)$$

$$L_{c,c} = P_{Rx_c} - P_{Tx_c} = L_{TxFc} + L_{OCScc} + L_{TxRc} + \lambda_1 (L_{TxFc} - \mu_F)^2 + \lambda_2 (L_{OCScc} - \mu_{OCS})^2 + \lambda_3 (L_{TxRc} - \mu_F)^2; \quad (11)$$

$$L_{c,d} = P_{Rx_d} - P_{Tx_c} = L_{TxFc} + L_{OCScd} + L_{TxRd} + \lambda_1 (L_{TxFc} - \mu_F)^2 + \lambda_2 (L_{OCScd} - \mu_{OCS})^2 + \lambda_3 (L_{TxRd} - \mu_F)^2; \quad (12)$$

$$L_{d,a} = P_{Rx_a} - P_{Tx_d} = L_{TxFd} + L_{OCSda} + L_{TxRa} + \lambda_1 (L_{TxFd} - \mu_F)^2 + \lambda_2 (L_{OCSda} - \mu_{OCS})^2 + \lambda_3 (L_{TxRa} - \mu_F)^2; \quad (13)$$

$$L_{d,b} = P_{Rx_b} - P_{Tx_d} = L_{TxFd} + L_{OCSdb} + L_{TxRb} + \lambda_1 (L_{TxFd} - \mu_F)^2 + \lambda_2 (L_{OCSdb} - \mu_{OCS})^2 + \lambda_3 (L_{TxRb} - \mu_F)^2; \quad (14)$$

$$L_{d,c} = P_{Rx_c} - P_{Tx_d} = L_{TxFd} + L_{OCSdc} + L_{TxRc} + \lambda_1 (L_{TxFd} - \mu_F)^2 + \lambda_2 (L_{OCSdc} - \mu_{OCS})^2 + \lambda_3 (L_{TxRc} - \mu_F)^2; \quad (15)$$

and

$$L_{d,d} = P_{Rx_d} - P_{Tx_d} = L_{TxFd} + L_{OCSdd} + L_{TxRd} + \lambda_1 (L_{TxFd} - \mu_F)^2 + \lambda_2 (L_{OCSdd} - \mu_{OCS})^2 + \lambda_3 (L_{TxRd} - \mu_F)^2. \quad (16)$$

In some examples, the computing system receives a data file of loss measurements (e.g., a CSV file) between different input and output ports. Each entry represents the measured total loss for that specific connection. In some cases, the computing system constructs a model in which each total loss measurement is expressed as the sum of the losses of the transmitter fiber, the OCS internal switch, and the receiver fiber, according to Eqn. 1 above. In some instances, the computing system incorporates prior knowledge regarding expected fiber and OCS losses (e.g., fiber losses should be around 0.2 dB, and OCS losses should be around 1.5 dB). In examples, the computing system uses a LSQR optimization technique with regularization terms are included to minimize deviations from expected values, according to Eqn. 2 above, to solve for the unknown loss values. In some examples, the computing system generates a report that details the estimated losses for each component, allowing users to pinpoint which ports or internal OCS connections have unusually high loss.

In the manner as described above with respect to Figs. 1 and 2, the system enables automated diagnosis, scalability, precision, cost-efficiency, and adaptability. In particular, the system automates the process of diagnosing high-loss components in optical circuit switches, eliminating the need for manual testing and inspection of individual components, and for trial-and-error approaches, thus saving time and resources. The system is capable of handling large-scale OCS networks with hundreds of input and output ports, making it suitable for data centers, telecommunications networks, cloud infrastructures, and AI network deployments. The system may also isolate the loss contribution of each component (e.g., fiber or internal OCS connection). By accurately estimating the loss of individual components, the system provides precise information that allows network operators to identify where the losses occur and to address specific high-loss components, thereby improving network performance and reducing downtime. Early detection of high-loss components can prevent more severe or extensive network failures or degradation, reducing the need for costly repairs and maintenance. The system is flexible and can be adapted to different OCS configurations and optical network setups by

adjusting parameters such as expected loss values.

The system further provides for improved network reliability, optimized maintenance, data-driven decision-making, and scalability across network sizes. In particular, by identifying the specific components responsible for high loss, network operators can take immediate corrective action, ensuring the reliability and efficiency of the optical network. The system can be integrated into regular network health checks to monitor and maintain optimal performance, reducing the need for disruptive manual testing. The generated reports provide data-driven insights that help network administrators prioritize repairs and replacements based on the severity of the loss detected in specific components. Whether applied to small or large-scale networks, the system remains effective in isolating and diagnosing loss sources across thousands of possible port combinations.

The system can be integrated into several stages of optical network operations, specifically focusing on deployment, initial turn-up, cabling verification, and production networks. When deploying a new OCS in a network, ensuring that all components - including optical fibers, ports, and internal switches - are functioning within acceptable loss thresholds is crucial to avoid performance degradation. During initial turn-up, the system can be used as part of an automated network commissioning process to verify the integrity of each connection. In the deployment and initial turn-up stages, automated loss testing and loss baseline establishment can be implemented. For automated loss testing, after the optical components (e.g., transmitter and receiver fibers, and the OCS) are connected, the system can run an initial test to measure the total loss for each input-output pair. By comparing these measurements to the expected loss ranges, the system can immediately detect and flag any components with abnormally high loss. The system can create a baseline for each connection's loss profile during the initial turn-up process. This baseline can then be stored and referenced in future maintenance cycles to monitor for any degradation or changes in performance.

In complex optical networks, improper cabling or damaged fibers are common causes of high loss and poor network performance. This system can be employed to verify the accuracy and health of cabling between optical modules and the OCS during and after the physical installation process. In the cabling verification stage, cable continuity and loss verification and/or real-time feedback can be implemented. For cable continuity and loss verification, the system automatically tests each fiber to ensure that it is connected correctly and that the loss through the fiber falls within the acceptable range. If a particular transmitter or receiver fiber shows excessive loss, it could indicate a problem with the fiber itself (e.g., bends, breaks, or improper connections). During the cabling verification process, the system provides real-time feedback to technicians, allowing for immediate identification and correction of faulty connections, reducing deployment times and preventing future performance issues.

Once the network is fully deployed and operational, the system can be integrated into routine monitoring and maintenance procedures. It can periodically test loss measurements across all OCS connections and compare them to the baseline established during the initial turn-up. For production networks, early fault detection and predictive maintenance can be implemented. By continuously monitoring loss values, the system can detect increasing losses over time, which could signal gradual fiber degradation, connector issues, or internal OCS problems. This early detection allows network operators to address problems before they impact network performance. With historical data from the baseline and ongoing monitoring, the system can be used to predict when certain fibers or components are likely to fail or fall out of spec, enabling proactive maintenance before failures occur.

Scalable and automated deployment tool can be implemented. For large data centers and service providers deploying multiple OCS units across a network, the system provides a scalable solution. It can be integrated into network management software to automate testing across thousands of connections during the deployment process, making large-scale rollouts faster and more reliable. In summary, the system enhances the deployment, verification, and monitoring processes in optical networks by providing automated, scalable, and precise loss analysis. The system ensures that networks are correctly installed and maintained, minimizing downtime and performance degradation due to optical loss.

Fig. 3 depicts an example heat map 300 of insertion loss measurements through an optical circuit switch when estimating loss in optical circuit switch networks. After isolating the loss measurements for the internal losses of the OCS, insertion loss measurements for each input port (among input ports or launching ports 1 through 4) and each output port (among output ports or receiving ports 1 through 4) are estimated. In some cases, the insertion loss measurements are presented in graphical form, such as shown in the heat map 300, where each insertion loss is depicted by a different color or shade of gray, or other graphical representation corresponding to loss measurement values of between 0.0 and 3.0. Although the heat map 300 of Fig. 3 corresponds to an OCS having four input ports and four output ports, a heat map can be generated for any OCS having any suitable number of input ports (e.g., $N$ number of input ports) and output ports (e.g., $M$ number of output ports), such as tens, hundreds, or thousands of input ports and tens, hundreds, or thousands of output ports. In some cases, the number $N$ of input ports is the same as the number $M$ of output ports (e.g., $320 \times 320$ ports, such as described above with respect to Fig. 2). In other cases, the number $N$ of input ports is the different from the number $M$ of output ports.

Although Figs. 1-3 (and the corresponding method of Fig. 4) are described with respect to estimating loss in optical circuit switch networks, the loss estimation techniques described herein are applicable to estimating loss in other

optical components, using similar models.

Fig. 4 depicts an example method 400 for estimating loss in optical circuit switch networks. In examples, the operations of example method 400 may be performed by a computing system (e.g., computing system(s) 165 of Fig. 1).

In the example method 400 of Fig. 4, at operation 405, a computing system causes each of a plurality of optical transmitters (e.g., optical transmitters 125a-125m of Fig. 1) to transmit optical signals to a corresponding one of a plurality of input ports (e.g., input ports 110a-110m or 210a-210d of Fig. 1 or 2) of an OCS (e.g., OCS 105 or 205 of Fig. 1 or 2). In some examples, the optical signals are transmitted from transmitting optics (e.g., transmitting optics 130a-130m or 230a-230d of Fig. 1 or 2) via an optical transmission port (e.g., one of the transmission port 135a-135m or 235a-235d of Fig. 1 or 2) of that optical transmitter, and via a corresponding one of a first set of optical fiber cables (e.g., optical fiber cables 140a-140m or 240a-240d of Fig. 1 or 2). In examples, the optical signals are transmitted in a programmed sequence with respect to duration of optical signals to particular pairs of optical transmitters and input ports (e.g., optical transmitter 125a - input port 110a, optical transmitter 125b - input port 110b, and so on).

At operation 410, the computing system causes the OCS to selectively route the optical signals that are received by each input port among the plurality of input ports to each of a plurality of output ports (e.g., output ports 115a-115n or 215a-215d of Fig. 1 or 2). In examples, the OCS selectively routes the optical signals from the input port(s) to the output port(s) using a selective switching system (e.g., selective switching system 120 of Fig. 1) of the OCS. In some examples, the selective switching system of the OCS includes a set of MEMS mirrors. The optical signals that are emitted from each output port are transmitted over a corresponding one of a second set of optical fiber cables (e.g., optical fiber cables 160a-160n or 260a-260d of Fig. 1 or 2) to a photodetector (e.g., among photodetectors 150a-150n or 250a-250d of Fig. 1 or 2), via an optical receiver port (e.g., among receiver ports 155a-155n or 255a-255d of Fig. 1 or 2), of a corresponding one of a plurality of optical receivers (e.g., optical receivers 145a-145n of Fig. 1).

At operation 415, the computing system receives a first set of optical power data corresponding to optical power emitted from transmitting optics of each of the plurality of optical transmitters, via a corresponding one of the first set of optical fiber cables that is coupled to an optical transmission port of that optical transmitter. In an example, receiving the first set of optical power data (at operation 415) includes receiving the first set of optical power data from the transmitting optics of each of the plurality of optical transmitters. Alternatively, receiving the first set of optical power data (at operation 415) includes receiving the first set of optical power data from a data file of loss measurements, where the first set of optical power data is previously received from the transmitting optics of each of the plurality of optical transmitters and stored in the data file of loss measurements.

At operation 420, the computing system receives a second set of optical power data that are measured by the photodetector of each of the plurality of optical receivers that is communicatively coupled to the plurality of output ports of the OCS, via a corresponding one of the second set of optical fiber cables that is coupled to the optical receiver port of that optical receiver. In an example, receiving the second set of optical power data (at operation 420) includes receiving the second set of optical power data from the photodetector of each of the plurality of optical receivers. Alternatively, receiving the second set of optical power data (at operation 420) includes receiving the second set of optical power data from the data file of loss measurements, where the second set of optical power data is previously received from the photodetector of each of the plurality of optical receivers and stored in the data file of loss measurements.

At operation 425, the computing system calculates a plurality of optical signal losses, in some cases, based on analysis of the first set of optical power data and the second set of optical power data in view of expected ranges of optical power. In examples, the plurality of optical signal losses includes a transmitter fiber loss for each of the first set of optical fiber cables, a receiver fiber loss for each of the second set of optical fiber cables, and an OCS internal switching loss for each path of a plurality of paths between a combination of pairs of the plurality of input ports and the plurality of output ports of the OCS. In some examples, calculating the plurality of optical signal losses (at operation 425) is based on a model that is constructed based on the first set of optical power data and the second set of optical power data in view of expected ranges of optical power. In examples, the model is constructed based on expected fiber losses for each of the first set of optical fiber cables and for each of the second set of optical fiber cables, based on expected OCS losses for each path among a plurality of paths between a combination of the plurality of input ports and the plurality of output ports of the OCS. In some examples, calculating the plurality of optical signal losses based on the model is performed using a least squares optimization algorithm.

In examples, the computing system determines whether any of the plurality of optical signal losses exceed a corresponding one of the expected ranges of optical power. In some examples, for each optical signal loss that exceeds the corresponding one of the expected ranges of optical power, the computing system identifies one or more particular components among the plurality of components of the optical circuit switch network that are potential causes of the optical signal loss exceeding the corresponding one of the expected ranges of optical power. The computing system generates a list of components of the optical circuit switch network based on the identification of potential causes of optical signal losses exceeding expected ranges of optical power. At operation 430, the computing system generates a report including estimated losses for each of a plurality of components of the optical circuit switch network, based on the plurality of optical signal losses calculated at operation 425. In some examples, generating the report (at operation 430) includes

incorporating the list of components in the report. In some cases, generating the report includes generating a heat map of insertion loss (such as shown in Fig. 3 or similar heat map for an OCS(s) having $N \times M$ number of port combinations), and incorporating the generated heat map in the report.

While the techniques and procedures in method 400 are depicted and/or described in a certain order for purposes of illustration, it should be appreciated that certain procedures may be reordered and/or omitted within the scope of various embodiments. Moreover, while the method 400 may be implemented by or with (and, in some cases, are described below with respect to) the systems, examples, or embodiments 100, 200, and 300 of Figs. 1, 2, and 3, respectively (or components thereof), such methods may also be implemented using any suitable hardware (or software) implementation. Similarly, while each of the systems, examples, or embodiments 100, 200, and 300 of Figs. 1, 2, and 3, respectively (or components thereof), can operate according to the method 400 (e.g., by executing instructions embodied on a computer readable medium), the systems, examples, or embodiments 100, 200, and 300 of Figs. 1, 2, and 3 can each also operate according to other modes of operation and/or perform other suitable procedures.

As should be appreciated from the foregoing, the present technology provides multiple technical benefits and solutions to technical problems. For instance, implementing optical circuit switch networks generally raises multiple technical problems. For example, one technical problem includes that optical circuit switch networks include hundreds of input and output fiber connections, and each connection between ports introduces an optical signal loss, which reduces network performance. The optical signal losses can occur due to multiple factors, including the loss in the optical fibers themselves, the internal loss within the OCS, and the connection losses between different optical components. With a large number of possible connections and unknown variables, it becomes extremely challenging to identify which component or connection is responsible for any abnormal loss. Current methods for loss estimation rely on either manual inspection, time-consuming testing, or imprecise estimation techniques, which can lead to inefficient maintenance and degraded network performance.

The present technology provides for a novel algorithm and system for automatically estimating the loss in an OCS network and identifying components with unusually high loss. By leveraging mathematical modeling, regularization techniques, and sparse matrix solving, the system can determine the contribution of individual components, such as the transmitter fiber, the internal OCS switching mechanism, and the receiver fiber, to the overall loss. The system takes as input a set of measured total losses between different port combinations (e.g., a CSV file of measured losses between $N$ input ports and $M$ output ports). From this data, the system constructs a series of equations that model the losses as the sum of multiple unknown components. The system then solves these equations using a least squares optimization method, applying regularization to ensure that the solutions are realistic and within expected ranges. By automatically diagnosing high-loss components, the system significantly enhances the performance, reliability, and cost-efficiency of optical networks in various industries. This system is particularly valuable for large-scale data centers, AI infrastructure, and telecommunications providers where maintaining low-loss optical paths is critical to network performance. In this manner, the system enables automated diagnosis, scalability, precision, cost-efficiency, and adaptability, while also providing for improved network reliability, optimized maintenance, data-driven decision-making, and scalability across network sizes.

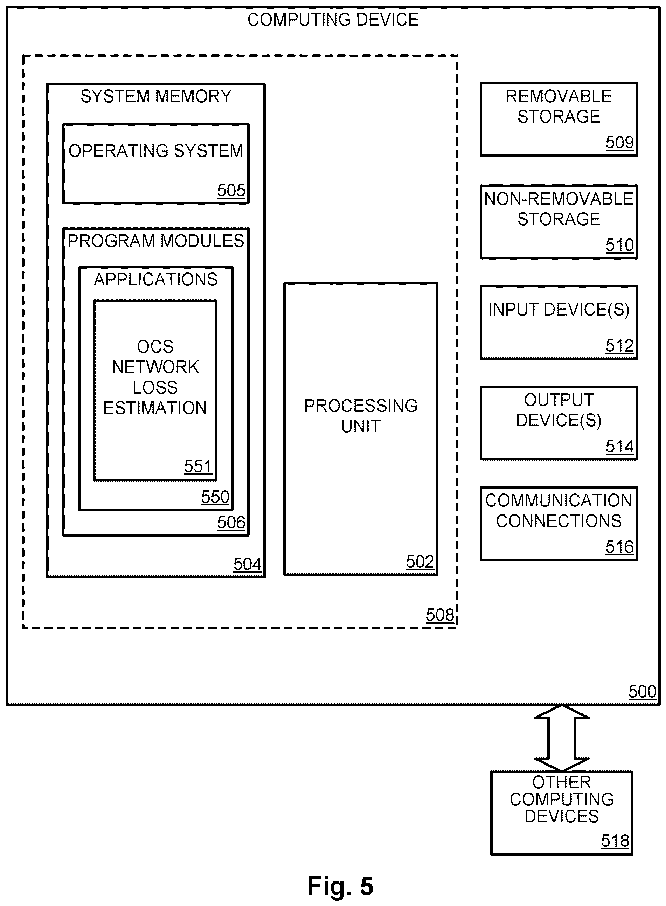

Fig. 5 depicts a block diagram illustrating physical components (i.e., hardware) of a computing device 500 with which examples of the present disclosure may be practiced. The computing device components described below may be suitable for a client device implementing the estimation of loss in optical circuit switch networks, as discussed above. In a basic configuration, the computing device 500 may include at least one processing unit 502 and a system memory 504. The processing unit(s) (e.g., processors) may be referred to as a processing system. Depending on the configuration and type of computing device, the system memory 504 may include volatile storage (e.g., random access memory), non-volatile storage (e.g., read-only memory), flash memory, or any combination of such memories. The system memory 504 may include an operating system 505 and one or more program modules 506 suitable for running software applications 550, such as OCS network loss estimation 551, to implement one or more of the systems or methods described above.

The operating system 505, for example, may be suitable for controlling the operation of the computing device 500. Furthermore, aspects of the invention may be practiced in conjunction with a graphics library, other operating systems, or any other application program and is not limited to any particular application or system. This basic configuration is illustrated in Fig. 5 by those components within a dashed line 508. The computing device 500 may have additional features or functionalities. For example, the computing device 500 may also include additional data storage devices (which may be removable and/or non-removable), such as, for example, magnetic disks, optical disks, or tape. Such additional storage is illustrated in Fig. 5 by a removable storage device(s) 509 and a non-removable storage device(s) 510.

As stated above, a number of program modules and data files may be stored in the system memory 504. While executing on the processing unit 502, the program modules 506 may perform processes including one or more of the operations of the method(s) as illustrated in Fig. 4, or one or more operations of the system(s) and/or apparatus(es) as described with respect to Figs. 1-3, or the like. Other program modules that may be used in accordance with examples of the present disclosure may include applications such as electronic mail and contacts applications, word processing

applications, spreadsheet applications, database applications, slide presentation applications, drawing or computer-aided application programs, AI applications and machine learning ("ML") modules on cloud-based systems, etc.

Furthermore, examples of the present disclosure may be practiced in an electrical circuit including discrete electronic elements, packaged or integrated electronic chips containing logic gates, a circuit utilizing a microprocessor, or on a single chip containing electronic elements or microprocessors. For example, examples of the present disclosure may be practiced via a system-on-a-chip ("SOC") where each or many of the components illustrated in Fig. 5 may be integrated onto a single integrated circuit. Such an SOC device may include one or more processing units, graphics units, communications units, system virtualization units and various application functionalities all of which may be integrated (or "burned") onto the chip substrate as a single integrated circuit. When operating via an SOC, the functionality, described herein, with respect to generating suggested queries, may be operated via application-specific logic integrated with other components of the computing device 500 on the single integrated circuit (or chip). Examples of the present disclosure may also be practiced using other technologies capable of performing logical operations such as, for example, AND, OR, and NOT, including mechanical, optical, fluidic, and/or quantum technologies.

The computing device 500 may also have one or more input devices 512 such as a keyboard, a mouse, a pen, a sound input device, and/or a touch input device, etc. The output device(s) 514 such as a display, speakers, and/or a printer, etc. may also be included. The aforementioned devices are examples and others may be used. The computing device 500 may include one or more communication connections 516 allowing communications with other computing devices 518. Examples of suitable communication connections 516 include radio frequency ("RF") transmitter, receiver, and/or transceiver circuitry; universal serial bus ("USB"), parallel, and/or serial ports; and/or the like.

The term "computer readable media" as used herein may include computer storage media. Computer storage media may include volatile and nonvolatile, and/or removable and non-removable, media that may be implemented in any method or technology for storage of information, such as computer readable instructions, data structures, or program modules. The system memory 504, the removable storage device 509, and the non-removable storage device 510 are all computer storage media examples (i.e., memory storage). Computer storage media may include random access memory ("RAM"), read-only memory ("ROM"), electrically erasable programmable read-only memory ("EEPROM"), flash memory or other memory technology, compact disk read-only memory ("CD-ROM"), digital versatile disks ("DVD") or other optical storage, magnetic cassettes, magnetic tape, magnetic disk storage or other magnetic storage devices, or any other article of manufacture which can be used to store information and which can be accessed by the computing device 500. Any such computer storage media may be part of the computing device 500. Computer storage media may be non-transitory and tangible, and computer storage media do not include a carrier wave or other propagated data signal.

Communication media may be embodied by computer readable instructions, data structures, program modules, or other data in a modulated data signal, such as a carrier wave or other transport mechanism, and may include any information delivery media. The term "modulated data signal" may describe a signal that has one or more characteristics that are set or changed in such a manner as to encode information in the signal. By way of example, communication media may include wired media such as a wired network or direct-wired connection, and wireless media such as acoustic, RF, infrared, and other wireless media.

In this detailed description, wherever possible, the same reference numbers are used in the drawing and the detailed description to refer to the same or similar elements. In some instances, a sub-label is associated with a reference numeral to denote one of multiple similar components. When reference is made to a reference numeral without specification to an existing sub-label, it is intended to refer to all such multiple similar components. In some cases, for denoting a plurality of components, the suffixes "a" through "n" may be used, where *n* denotes any suitable non-negative integer number (unless it denotes the number 14, if there are components with reference numerals having suffixes "a" through "m" preceding the component with the reference numeral having a suffix "n"), and may be either the same or different from the suffix "n" for other components in the same or different figures. For example, for component #1 X05a-X05n, the integer value of *n* in X05n may be the same or different from the integer value of *n* in X10n for component #2 X10a-X10n, and so on. In other cases, other suffixes (e.g., *s*, *t, u, v*, *w*, *x*, *y*, and/or *z*) may similarly denote non-negative integer numbers that (together with *n* or other like suffixes) may be either all the same as each other, all different from each other, or some combination of same and different (e.g., one set of two or more having the same values with the others having different values, a plurality of sets of two or more having the same value with the others having different values).

Unless otherwise indicated, all numbers used herein to express quantities, dimensions, and so forth used should be understood as being modified in all instances by the term "about." In this application, the use of the singular includes the plural unless specifically stated otherwise, and use of the terms "and" and " or" means "and/or" unless otherwise indicated. Moreover, the use of the term "including," as well as other forms, such as "includes" and "included," should be considered non-exclusive. Also, terms such as "element" or "component" encompass both elements and components including one unit and elements and components that include more than one unit, unless specifically stated otherwise.

In this detailed description, for the purposes of explanation, numerous specific details are set forth to provide a thorough understanding of the described embodiments. It will be apparent to one skilled in the art, however, that other embodiments of the present invention may be practiced without some of these specific details. In other instances, certain

structures and devices are shown in block diagram form. While aspects of the technology may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the detailed description does not limit the technology, but instead, the proper scope of the technology is defined by the appended claims. Examples may take the form of a hardware implementation, or an entirely software implementation, or an implementation combining software and hardware aspects. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features. The detailed description is, therefore, not to be taken in a limiting sense.

Aspects of the present invention, for example, are described above with reference to block diagrams and/or operational illustrations of methods, systems, and computer program products according to aspects of the invention. The functions and/or acts noted in the blocks may occur out of the order as shown in any flowchart. For example, two blocks shown in succession may in fact be executed substantially concurrently or the blocks may sometimes be executed in the reverse order, depending upon the functionalities and/or acts involved. Further, as used herein and in the claims, the phrase "at least one of element A, element B, or element C" (or any suitable number of elements) is intended to convey any of: element A, element B, element C, elements A and B, elements A and C, elements B and C, and/or elements A, B, and C (and so on).

The description and illustration of one or more aspects provided in this application are not intended to limit or restrict the scope of the invention as claimed in any way. The aspects, examples, and details provided in this application are considered sufficient to convey possession and enable others to make and use the best mode of the claimed invention. The claimed invention should not be construed as being limited to any aspect, example, or detail provided in this application. Regardless of whether shown and described in combination or separately, the various features (both structural and methodological) are intended to be selectively rearranged, included, or omitted to produce an example or embodiment with a particular set of features. Having been provided with the description and illustration of the present application, one skilled in the art may envision variations, modifications, and alternate aspects, examples, and/or similar embodiments falling within the spirit of the broader aspects of the general inventive concept embodied in this application that do not depart from the broader scope of the claimed invention.

## Claims

1. A monitoring system that is used in estimating loss in an optical circuit switch network, comprising:

   a processing system; and
   memory coupled to the processing system, the memory comprising computer executable instructions that, when executed by the processing system, causes the monitoring system to perform operations comprising:

      receiving a first set of optical power data corresponding to optical power emitted from transmitting optics of each of a plurality of optical transmitters that is communicatively coupled to a plurality of input ports of an optical circuit switch ("OCS"), via a corresponding one of a first set of optical fiber cables that is coupled to an optical transmission port of that optical transmitter;
      receiving a second set of optical power data that are measured by a photodetector of each of a plurality of optical receivers that is communicatively coupled to a plurality of output ports of the OCS, via a corresponding one of a second set of optical fiber cables that is coupled to an optical receiver port of that optical receiver;
      calculating a plurality of optical signal losses, based on analysis of the first set of optical power data and the second set of optical power data in view of expected ranges of optical power; and
      generating a report including estimated losses for each of a plurality of components of the optical circuit switch network, based on the plurality of optical signal losses.

2. The monitoring system of claim 1, wherein the operations further comprise, prior to receiving the first set of optical power data and the second set of optical power data:

   causing each of the plurality of optical transmitters to transmit optical signals from the transmitting optics via the optical transmission port of that optical transmitter to a corresponding one of the plurality of input ports of the OCS, via a corresponding one of the first set of optical fiber cables, in a programmed sequence with respect to duration of optical signals to particular pairs of optical transmitters and input ports; and

causing the OCS to selectively route, using a selective switching system of the OCS, the optical signals that are received by each input port among the plurality of input ports to each of the plurality of output ports, the optical signals that are emitted from each output port being transmitted over a corresponding one of the second set of optical fiber cables to the photodetector, via the optical receiver port, of a corresponding one of the plurality of optical receivers.

**3.** The monitoring system of claim 2, wherein the selective switching system of the OCS comprises a micro-electro-mechanical systems ("MEMS") mirrors.

**4.** The monitoring system of one of claims 1 to 3, at least one of:

wherein the plurality of optical signal losses including a transmitter fiber loss for each of the first set of optical fiber cables, a receiver fiber loss for each of the second set of optical fiber cables, and an OCS internal switching loss for each path of a plurality of paths between a combination of pairs of the plurality of input ports and the plurality of output ports of the OCS;
wherein the first set of optical power data is received from the transmitting optics of each of the plurality of optical transmitters and stored in a data file of loss measurements,
wherein receiving the first set of optical power data corresponding to the optical power emitted from the transmitting optics of each of the plurality of optical transmitters comprises receiving the first set of optical power data from the data file of loss measurements, wherein
the second set of optical power data is received from the photodetector of each of the plurality of optical receivers and stored in the data file of loss measurements, and wherein
receiving the second set of optical power data that are measured by the photodetector of each of the plurality of optical receivers comprises receiving the second set of optical power data from the data file of loss measurements; and
wherein calculating the plurality of optical signal losses is based on a model that is constructed based on the first set of optical power data and the second set of optical power data in view of expected ranges of optical power, preferably wherein the model is constructed based on expected fiber losses for each of the first set of optical fiber cables and for each of the second set of optical fiber cables, based on expected OCS losses for each path among a plurality of paths between a combination of the plurality of input ports and the plurality of output ports of the OCS, wherein calculating the plurality of optical signal losses based on the model is performed using a least squares optimization algorithm.

**5.** The monitoring system of one of claims 1 to 4, wherein the operations further comprise:

determining whether any of the plurality of optical signal losses exceed a corresponding one of the expected ranges of optical power; and
for each optical signal loss that exceeds the corresponding one of the expected ranges of optical power,
identifying one or more particular components among the plurality of components of the optical circuit switch network that are potential causes; and
generating a list of components of the optical circuit switch network based on the identification of potential causes of optical signal losses exceeding expected ranges of optical power;
wherein generating the report includes incorporating the list of components in the report.

**6.** A computer-implemented method for estimating loss in an optical circuit switch network, the method comprising:

receiving a first set of optical power data corresponding to optical power emitted from transmitting optics of each of a plurality of optical transmitters that is communicatively coupled to a plurality of input ports of an optical circuit switch ("OCS"), via a corresponding one of a first set of optical fiber cables that is coupled to an optical transmission port of that optical transmitter;
receiving a second set of optical power data that are measured by a photodetector of each of a plurality of optical receivers that is communicatively coupled to a plurality of output ports of the OCS, via a corresponding one of a second set of optical fiber cables that is coupled to an optical receiver port of that optical receiver;
calculating a plurality of optical signal losses, based on analysis of the first set of optical power data and the second set of optical power data in view of expected ranges of optical power; and
generating a report including estimated losses for each of a plurality of components of the optical circuit switch network, based on the plurality of optical signal losses.

**7.** The computer-implemented method of claim 6, further comprising, prior to receiving the first set of optical power data and the second set of optical power data:

causing each of the plurality of optical transmitters to transmit optical signals from the transmitting optics via the optical transmission port of that optical transmitter to a corresponding one of the plurality of input ports of the OCS, via a corresponding one of the first set of optical fiber cables, in a programmed sequence with respect to duration of optical signals to particular pairs of optical transmitters and input ports; and
causing the OCS to selectively route, using a selective switching system of the OCS, the optical signals that are received by each input port among the plurality of input ports to each of the plurality of output ports, the optical signals that are emitted from each output port being transmitted over a corresponding one of the second set of optical fiber cables to the photodetector, via the optical receiver port, of a corresponding one of the plurality of optical receivers.

**8.** The computer-implemented method of claim 7, wherein causing each of the plurality of optical transmitters to transmit optical signals, causing the OCS to selectively route the optical signals, receiving the first set of optical power data, receiving the second set of optical power data, calculating the plurality of optical signal losses, and generating the report are part of a loss estimation process, wherein the loss estimation process is performed as part of one or more of:

a deployment of a new OCS in a network;
a cabling verification of the first set of optical fiber cables and the second set of optical fiber cables; or
a routine monitoring and maintenance process of the optical circuit switch network.

**9.** The computer-implemented method of claim 8, further comprising performing one or more of automated loss testing, loss baseline establishment, cable continuity verification, loss verification, real-time feedback, preemptive fault detection, or predictive maintenance as part of the loss estimation process.

**10.** The computer-implemented method of one of claims 6 to 9, at least one of:

wherein the plurality of optical signal losses including a transmitter fiber loss for each of the first set of optical fiber cables, a receiver fiber loss for each of the second set of optical fiber cables, and an OCS internal switching loss for each path of a plurality of paths between a combination of pairs of the plurality of input ports and the plurality of output ports of the OCS; and
further comprising:

determining whether any of the plurality of optical signal losses exceed a corresponding one of the expected ranges of optical power; and
for each optical signal loss that exceeds the corresponding one of the expected ranges of optical power, identifying one or more particular components among the plurality of components of the optical circuit switch network that are potential causes; and
generating a list of components of the optical circuit switch network based on the identification of potential causes of optical signal losses exceeding expected ranges of optical power;
wherein generating the report includes incorporating the list of components in the report.

**11.** A system for estimating loss in an optical circuit switch network, the system comprising:

an optical circuit switch ("OCS") comprising a plurality of input ports, a plurality of output ports, and a selective switching system that selectively routes optical signals from one input port among the plurality of input ports to one output port among the plurality of output ports;
a plurality of optical transmitters, each comprising transmitting optics and an optical transmission port;
a first set of optical fiber cables each coupling the optical transmission port of one of the plurality of optical transmitters with one of the plurality of input ports of the OCS;
a plurality of optical receivers, each comprising a photodetector and an optical receiver port;
a second set of optical fiber cables each coupling one of the plurality of output ports of the OCS with the optical receiver port of one of the plurality of optical receivers; and
a computing system communicatively coupled with the plurality of optical transmitters and the plurality of optical receivers, the computing system executing computer executable instructions that cause the computing system to perform operations comprising:

causing each of the plurality of optical transmitters to transmit optical signals from the transmitting optics via the optical transmission port of that optical transmitter to a corresponding one of the plurality of input ports of the OCS, via a corresponding one of the first set of optical fiber cables, in a programmed sequence with respect to duration of optical signals to particular pairs of optical transmitters and input ports;
causing the OCS to selectively route, using the selective switching system, the optical signals that are received by each input port among the plurality of input ports to each of the plurality of output ports, the optical signals that are emitted from each output port being transmitted over a corresponding one of the second set of optical fiber cables to the photodetector, via the optical receiver port, of a corresponding one of the plurality of optical receivers;
receiving a first set of optical power data corresponding to optical power emitted from the transmitting optics of each of the plurality of optical transmitters;
receiving a second set of optical power data that are measured by the photodetector of each of the plurality of optical receivers;
calculating a plurality of optical signal losses, based on analysis of the first set of optical power data and the second set of optical power data in view of expected ranges of optical power; and
generating a report including estimated losses for each of a plurality of components of the optical circuit switch network, based on the plurality of optical signal losses.

**12.** The system of claim 11, at least one of:

wherein the selective switching system of the OCS comprises a micro-electromechanical systems ("MEMS") mirrors; and
wherein the plurality of optical signal losses including a transmitter fiber loss for each of the first set of optical fiber cables, a receiver fiber loss for each of the second set of optical fiber cables, and an OCS internal switching loss for each path of a plurality of paths between a combination of pairs of the plurality of input ports and the plurality of output ports of the OCS.

**13.** The system of claim 11 or 12, wherein the operations further comprise:

determining whether any of the plurality of optical signal losses exceed a corresponding one of the expected ranges of optical power; and
for each optical signal loss that exceeds the corresponding one of the expected ranges of optical power, identifying one or more particular components among the plurality of components of the optical circuit switch network that are potential causes; and
generating a list of components of the optical circuit switch network based on the identification of potential causes of optical signal losses exceeding expected ranges of optical power;
wherein generating the report includes incorporating the list of components in the report.

**14.** The system of one of claims 11 to 13, wherein causing each of the plurality of optical transmitters to transmit optical signals, causing the OCS to selectively route the optical signals, receiving the first set of optical power data, receiving the second set of optical power data, calculating the plurality of optical signal losses, and generating the report are part of a loss estimation process, wherein the loss estimation process is performed as part of one or more of:

a deployment of a new OCS in a network;
a cabling verification of the first set of optical fiber cables and the second set of optical fiber cables; or
a routine monitoring and maintenance process of the optical circuit switch network.

**15.** The system of claim 14, wherein the operations further comprise performing one or more of automated loss testing, loss baseline establishment, cable continuity verification, loss verification, real-time feedback, preemptive fault detection, or predictive maintenance as part of the loss estimation process.

Instructions
175
Instructions
170a
Instructions
170b
Instructions
170m
Power Data
180a
Power Data
180b
Power Data
180m
Power Data
185a
Power Data
185b
Power Data
185n
Computing System(s)
165
Tx Optics 130a
Optical Transmitter 125a
Tx Port
135a
Tx Optics 130b
Optical Transmitter 125b
Tx Port
135b
Tx Optics 130m
Optical Transmitter 125m
Tx Port
135m
Photodetector 150a
Optical Receiver 145a
Rx Port
155a
Photodetector 150b
Optical Receiver 145b
Rx Port
155b
Photodetector 150n
Optical Receiver 145n
Rx Port
155n
140a
140b
140m
160a
160b
160n
Input Port 110a
Input Port 110b
Input Port 110m
Output Port 115a
Output Port 115b
Output Port 115n
120a
120b
120z
OCS
105
Report(s)
190
Device(s)
195
100

Fig. 1

P_Rx - P_Tx
L_TxF
L_OCS
L_RxF
Tx Optics 230a
Tx Port 235a
L_TxFa
240a
Input Port 210a
L_OCSaa
L_OCSab
L_OCSac
L_OCSad
Output Port 215a
L_RxFa
260a
Rx Port 255a
Photodetector 250a
L_OCSba
L_OCSbb
L_OCSbc
L_OCSbd
Tx Optics 230b
Tx Port 235b
L_TxFb
240b
Input Port 210b
Output Port 215b
L_RxFb
260b
Rx Port 255b
Photodetector 250b
L_OCSca
L_OCScb
L_OCScc
L_OCScd
Tx Optics 230c
Tx Port 235c
L_TxFc
240c
Input Port 210c
Output Port 215c
L_RxFc
260c
Rx Port 255c
Photodetector 250c
L_OCSda
L_OCSdb
L_OCSdc
L_OCSdd
Tx Optics 230d
Tx Port 235d
L_TxFd
240d
Input Port 210d
Output Port 215d
L_RxFd
260d
Rx Port 255d
Photodetector 250d
OCS 205
200

Fig. 2

Heat Map of Insertion Loss Measurements
Input Port 1
Input Port 2
Input Port 3
Input Port 4
Output Port 1
Output Port 2
Output Port 3
Output Port 4

Fig. 3

300

Cause, by a computing system, each of a plurality of optical transmitters to transmit optical signals to a corresponding one of a plurality of input ports of an OCS
405
Cause, by the computing system, the OCS to selectively route the optical signals that are received by each input port among the plurality of input ports to each of a plurality of output ports, to a corresponding one of a plurality of optical receivers
410
Receive, by the computing system, a first set of optical power data corresponding to optical power emitted from transmitting optics of each of the plurality of optical transmitters
415
Receive, by the computing system, a second set of optical power data that are measured by a photodetector of each of the plurality of optical receivers
420
Calculate, by the computing system, a plurality of optical signal losses
425
Generate, by the computing system, a report including estimated losses for each of a plurality of components of the optical circuit switch network, based on the plurality of optical signal losses
430
400

Fig. 4

COMPUTING DEVICE
SYSTEM MEMORY
OPERATING SYSTEM
505
PROGRAM MODULES
APPLICATIONS
OCS NETWORK LOSS ESTIMATION
551
550
506
504
PROCESSING UNIT
502
508
REMOVABLE STORAGE
509
NON-REMOVABLE STORAGE
510
INPUT DEVICE(S)
512
OUTPUT DEVICE(S)
514
COMMUNICATION CONNECTIONS
516
500
OTHER COMPUTING DEVICES
518

Fig. 5

# EUROPEAN SEARCH REPORT

Application Number
EP 26 15 7728

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| A | US 2016/004014 A1 (CALIENT TECHNOLOGIES INC [US]) 7 January 2016 (2016-01-07)<br>* paragraphs [0034] - [0046]; figures 2,3 * | 1-15 | INV.<br>H04B10/077<br>G02B6/35<br>H04B10/079<br>H04Q11/04 |
| A | STABILE R. ET AL: "Photonic integrated nodes for next-generation metro optical networks",<br>PROCEEDINGS OF THE SPIE SPIE, US,<br>vol. 11712, 5 March 2021 (2021-03-05), pages 117120D-117120D, XP060140467,<br>ISSN: 0277-786X, DOI: 10.1117/12.2578846<br>ISBN: 9781510657380<br>* sections 3.1 and 3.2, description of the switch testbed;<br>figure 3 * | 1-15 | |
| A | CHENG QIXIANG ET AL: "Scalable Microring-Based Silicon Clos Switch Fabric With Switch-and-Select Stages",<br>IEEE JOURNAL OF SELECTED TOPICS IN QUANTUM ELECTRONICS IEEE, USA,<br>vol. 25, no. 5,<br>1 September 2019 (2019-09-01), pages 1-11, XP011724500,<br>ISSN: 1077-260X, DOI: 10.1109/JSTQE.2019.2911421<br>[retrieved on 2019-05-14]<br>* Section IV/B;<br>figures 9,11 * | 1-15 | TECHNICAL FIELDS SEARCHED (IPC)<br>H04B<br>G02B<br>H04Q |
| A | US 6 959 126 B1 (LOFLAND ROB [US] ET AL) 25 October 2005 (2005-10-25)<br>* column 2, line 24 - column 6, line 29; figures 3-5, 9,11 *<br>* column 13, lines 28-64 * | 1-15 | |

The present search report has been drawn up for all claims

1

| Place of search | Date of completion of the search | Examiner |
|---|---|---|
| Munich | 9 July 2026 | Koch, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 26 15 7728

This annex lists the patent family members relating to the patent documents cited in the above-mentioned European search report. The members are as contained in the European Patent Office EDP file on
The European Patent Office is in no way liable for these particulars which are merely given for the purpose of information.

09-07-2026

| Patent document cited in search report | Publication date | Patent family member(s) | Publication date |
| --- | --- | --- | --- |
| US 2016004014 A1 | 07-01-2016 | NONE | |
| US 6959126 B1 | 25-10-2005 | NONE | |

EPO FORM P0459

For more details about this annex : see Official Journal of the European Patent Office, No. 12/82